(19)

Europäisches
Patentamt
European
Patent Office
Office européen
des brevets

(11) **EP 2 395 318 A1**

(12) **EUROPEAN PATENT APPLICATION**
published in accordance with Art. 153(4) EPC

(43) Date of publication:
**14.12.2011 Bulletin 2011/50**

(21) Application number: **09839712.8**

(22) Date of filing: **16.12.2009**

(51) Int Cl.:
**G01B 11/26** (2006.01)   **G06T 1/00** (2006.01)
**H04N 5/225** (2006.01)   **H04N 5/232** (2006.01)

(86) International application number:
**PCT/JP2009/070945**

(87) International publication number:
**WO 2010/089938 (12.08.2010 Gazette 2010/32)**

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **09.02.2009 JP 2009027207**

(71) Applicant: **NEC Corporation
Tokyo 108-8001 (JP)**

(72) Inventor: **SHIBA, Hisashi
Tokyo 108-8001 (JP)**

(74) Representative: **Glawe, Delfs, Moll
Patent- und Rechtsanwälte
Postfach 26 01 62
80058 München (DE)**

(54) **ROTATION ESTIMATION DEVICE, ROTATION ESTIMATION METHOD, AND STORAGE MEDIUM**

(57)   A rotation estimation device includes an attitude determination section that accepts a plurality of three-dimensional images captured by an images capturing device at a plurality of timings, detects a plane region that is present in common with the plurality of images, and obtains a relative attitude of the image capturing device to the plane region in the image based on the image for each of the plurality of images; and a rotation state estimation section that obtains a rotational state of the image capturing device based on the relative attitude of the image capturing device, the relative attitude being obtained for each of the images.

Fig.1

**Description**

TECHNICAL FIELD

The present invention relates to a rotation estimation device, a rotation estimation method, and a record medium, in particular, to those that estimate the rotation of an image capturing device based on a three-dimensional image that is input therefrom.

BACKGROUND ART

An attitude estimation method that estimates the attitude of an image capturing device (for example, a stereo camera or a radar) securely mounted on a vehicle (for example, an aerial or space flight vehicle or an underwater cruising vehicle) is known in the art (refer to Patent Literature 1).

In this attitude estimation method, a predetermined reference object (for example, a ground surface, a sea floor, a sea surface, a plant thereon, or a structure thereon, such as a building, thereon) is captured by an image capturing device securely mounted on such a vehicle and accordingly a captured image including the reference object is generated.

In this attitude estimation method, by comparing the captured image with a reference image (for example, a topographic chart that represents a reference object that has been obtained in advance or a shape chart that represents the shape of the reference object), the location of the reference object in the captured image and distortion of the reference object in the captured image are identified, then the attitude of the image capturing device is estimated based on the location of the reference object in the captured image and the distortion of the reference object in the captured image.

Errors that accumulated in attitude sensors such as a gyroscope built in the vehicle can be compensated based on the attitude of the image capturing device estimated according to the attitude estimation method.

If the attitude of the image capturing device can be accurately obtained according to the attitude estimation method, since the attitude sensors such as a gyroscope can be omitted, the flight vehicle or cruising vehicle can be miniaturized more significantly than before.

What is more, once the attitude is estimated, whether or not the image capturing device is rotating can be easily distinguished based on its attitudes at a plurality of times. When the image capturing device is rotating, the rotational speed and the orientation of the rotational axis can be also computed.

RELATED ART LITERATURE

PATENT LITERATURE

Patent document 1 : JP2004-127080A

SUMMARY THE INVENTION

PROBLEM TO BE SOLVED BY THE INVENTION

A technique that computes the attitude and rotational state of the image capturing device based on a captured image of a predetermined reference object and a reference image has the following problem.

If a captured image is unclear or contains a lot of noise due to the image capturing environment or the performance of the image capturing device, the reference object in the captured image cannot be distinguished. Thus, the attitude of the image capturing device and the rotational state of the image capturing device cannot be estimated.

An object of the present invention is to provide a rotation estimation device, a rotation estimation method, and a record medium that can solve the above-described problem.

MEANS THAT SOLVE THE PROBLEM

A rotation estimation device according to the present invention includes attitude determination means that accepts a plurality of three-dimensional images captured by an image capturing device at a plurality of timings, detects a plane region that is present in common with the plurality of images, and obtains a relative attitude of the image capturing device to the plane region in the image based on the image for each of the plurality of images; and rotation state estimation means that obtains a rotational state of the image capturing device based on the relative attitude of the image capturing device, the relative attitude being obtained for each of the images.

A rotation estimation method according to the present invention is a rotation estimation method, which is performed by a rotation estimation device, including: accepting a plurality of three-dimensional images captured by an image capturing device at a plurality of timings, detecting a plane region that is present in common with the plurality of images, and obtaining a relative attitude of the image capturing device to the plane region in the image based on the image for each of the plurality of images; and obtaining a rotational state of the image capturing device based on the relative attitude of the image capturing device, the relative attitude being obtained for each of the images.

A record medium according to the present invention is a computer-readable record medium that stores a program that causes a computer to execute procedures including an attitude determination procedure that accepts a plurality of three-dimensional images captured by an image capturing device at a plurality of timings, detects a plane region that is present in common with the plurality of images, and obtains a relative attitude of the image capturing device to the plane region in the image based on the image for each of the plurality of images; and a rotational state estimation procedure that obtains a rotational state of the image capturing device based on the relative attitude of the image capturing device, the relative attitude being obtained for each of the images.

EFFECT OF THE INVENTION

According to the present invention, the rotational state of the image capturing device can be estimated without necessity of a predetermined reference object. Thus, if the predetermined reference object cannot be recognized in a captured image or if a reference object is not present in the captured image, the rotational state of the image capturing device can be estimated.

BRIEF DESCRIPTION OF DRAWINGS

[Fig. it is a block diagram showing rotation estimation system 10 including a first exemplary embodiment of the present invention.
[Fig. 2] is a schematic diagram showing an example of the relationship between the attitude and location of image capturing device 5 to reference plane 3A.
[Fig. 3] is a schematic diagram showing an example of the relationship between the attitude and location of image capturing device 5 to reference plane 3A.
[Fig. 4] is a schematic diagram showing an example of the relationship between the attitude and location of image capturing device 5 to reference plane 3A in the cast yaw is present with respect to the y axis.
[Fig. 5] is a schematic diagram showing an example of the relationship between the attitude and location of image capturing device 5 to reference plane 3A based on a rotational motion of image capturing device 5.
[Fig. 6] is a block diagram showing rotation estimation system 10A including a second exemplary embodiment of the present invention.
[Fig. 7] is a block diagram showing rotation estimation system 10B including a third exemplary embodiment of the present invention.
[Fig. 8] is a block diagram showing rotation estimation system 10C including a fourth exemplary embodiment of the present invention.
[Fig. 9] is a block diagram showing rotation estimation system 10D including a fifth exemplary embodiment of the present invention.

MODES THAT CARRY OUT THE INVENTION

Next, with reference to drawings, exemplary embodiments of the present invention will be described in detail.

(First exemplary embodiment)

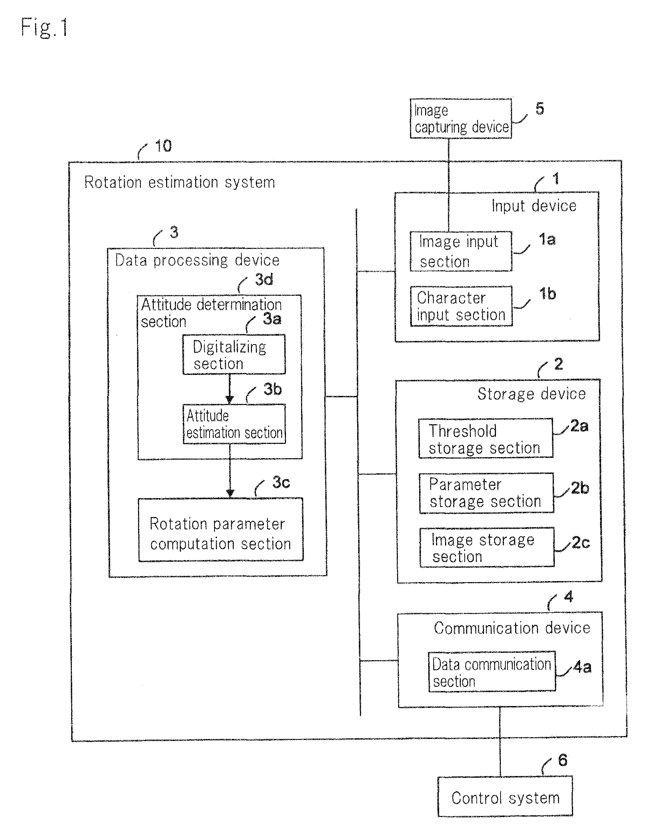

Fig. 1 is a block diagram showing rotation estimation system 10 including a first exemplary embodiment of the present invention.
Referring to Fig. 1, rotation estimation system 10 includes input device 1, storage device 2, data processing device 3, and communication device 4.
Input device 1 includes image input section 1a and character input section 1b.
Image input section 1a accepts a plurality of three-dimensional images (hereinafter referred to as 3D images) 5A captured by image capturing device 5 at a plurality of timings.

Image capturing device 5 is for example a stereo camera, a laser range finder, a radar, a sonar, or a lidar and captures objects and generates 3D images 5A.

If image capturing device 5 is securely mounted on a vehicle such as a flight vehicle or a cruising vehicle, the attitude of image capturing device, also means the attitude of the vehicle on which image capturing device 5 is securely mounted.

3D images 5A are not restricted as long as they includes information that represents the distance between individual objects that appear in 3D images 5A and image capturing device 5.

3D images 5A may be 3D still images at a plurality of times or 3D moving images. Of course, a 3D moving image includes a plurality of 3D still images captured by image capturing device 5 at a plurality of timings.

Alternatively, 3D images 5A may be 3D images that represent physical quantities as various spatial or temporal magnitudes such as speed fields or magnetic fields or those that represent image characteristic quantities obtained by various types of computations such as convolution using particular functions, alternatively 3D images 5A may be 3D images in which temporal variations of image characteristic quantities are represented in high order.

In this exemplary embodiment it is assumed that capture date/time information is stamped on 3D images 5A by image capturing device 5. Thus, timings (times) at which 3D images 5A were captured by image capturing device 5 can be recognized by the capture date/time information stamped on 3D images 5A.

Character input section 1b is for example a keyboard, a mouse, or a touch panel and inputs character information.

Storage device 2 includes threshold storage section 2a, parameter storage section 2b, and image storage section 2c.

Threshold storage section 2a stores various types of thresholds that are input from character input section 1b.

Parameter storage section 2b stores a parameter space and a list of detection candidate planes that is used when reference plane (flat plane or curved plane) 3A as a detection object are detected.

In this example, reference plane 3A is a plane region that is present in common with 3D images 5A, more specifically, a plane that includes the plane region.

Image storage section 2c stores the plurality of 3D images 5A that are input from image input section 1 a and images that are being processed or that were processed by individual structural sections of data processing device 3.

Data processing device 3 can be generally referred to as the rotation estimation device.

Data processing device 3 includes digitalizing section 3a, attitude estimation section 3b, and rotation parameter computation section 3c. Digitalizing section 3a and attitude estimation section 3b are included in attitude determination section 3d.

Attitude determination section 3d can be generally referred to as attitude determination means.

Attitude determination section 3d accepts the plurality of 3D images 5A captured at a plurality of timings by image capturing device 5. Attitude determination section 3d detects reference plane 3A (plane region) that is present in common with the plurality of 3D images 5A.

Reference plane 3A is for example a ground surface, a sea surface, or a wall surface.

Attitude determination section 3d obtains the relative attitude of image capturing device 5 to reference plane 3A for each of 3D images 5A, based thereon, and therein.

Digitalizing section 3a can be generally referred to as detection means.

Digitalizing section 3a accepts the plurality of 3D images 5A and detects candidate region CR as a candidate of reference plane 3A from each of 3D images 5A, based thereof, and therein.

In this exemplary embodiment, digitalizing section 3a divides each of 3D images 5A that are input from image input section 1 a into candidate region CR and a region other than candidate region CR (hereinafter referred to as background region BR) based on pixel values of each of 3D images 5A.

For example, digitalizing section 3a performs a digitalizing process that is in common for each pixel of each of the plurality of 3D images 5A so as to divide each of 3D images 5A into candidate region CR and background region BR.

Thus, the likelihood in which a plane in which an object that is captured in common in each of 3D images appears is set as candidate region CR becomes high.

Attitude estimation section 3b can be generally referred to as attitude estimation means.

Attitude estimation sections 3b detects reference plane 3A based on candidate region CR of each of 3D images 5A. In addition, attitude estimation section 3b obtains the relative attitude of image capturing device 5 to reference plane 3A for each of 3D images 5A, based thereon, and therein.

In this exemplary embodiment, attitude estimation section 3b identifies the location of reference plane 3A based on the location of candidate region CR for each of 3D images 5A and also obtains the attitude of image capturing device 5 to reference plane 3A and the distance between reference plane 3A and image capturing device 5 based on each of 3D images 5A, based thereon, and therein.

Rotation parameter computation section 3c can be generally referred to as rotational state estimation means.

Rotation parameter computation section 3c obtains the rotational state, namely rotation parameters, of image capturing device 5 based on the relative attitude of image capturing device 5 to reference plane 3A, the relative attitude being obtained for each of 3D images 5A.

Rotation parameter computation section 3c obtains the angle of rotation of image capturing device 5 to a predetermined reference direction and the temporal variation of the angle of rotation of image capturing device 5 as the rotational state of image capturing device 5 (rotation parameters of image capturing device 5) based on the relative attitude of image capturing device 5 to reference plane 3A, the relative attitude being obtained for each of 3D images 5A,

In this exemplary embodiment, rotation parameter computation section 3c accepts the relative attitude of images capturing device 5 to reference plane 3A and the distance therebetween, the relative attitude being obtained by attitude estimation section 3b for each of 3D images 5A, in other words, at each of a plurality of times.

Rotation parameter computation section 3c obtains the angle of rotation of image capturing device 5 to the predetermined reference direction and the temporal variation of the angle of rotation such as rotational speed or rotational acceleration as the rotational state of image capturing device 5 (rotation parameters of image capturing device 5) based on the relative attitude of image capturing device 5 to reference plane 3A and the distance therebetween at a plurality of times.

Rotation parameter computation section 3c supplies the rotational state of image capturing device 5 (rotation parameters of image capturing device 5) to external control system 6 or the like through communication device 4.

Communication device 4 includes data transmission section 4a that supplies the rotational state of image capturing device 5 (rotation parameters of image capturing device 5) to external control system 6 or the like through a wired or wireless network.

Next, with reference to Fig. 1, the operation of rotation estimation system 10 will be described.

Whenever accepting each of 3D images 5A from image capturing device 5, image input section 1a stores it to image storage section 2c.

Digitalizing section 3a refers to image storage section 2c, successively accepts 3D images 5A from image storage section 2c, and divides each of 3D images 5A into candidate region CR and background region BR based on pixel values of each of 3D images 5A.

Generally, digitalizing section 3a divides each of 3D images 5A into two regions of candidate region CR and background region BR according to an ordinary method in which a two-dimensional image is divided into two regions.

For example, digitalizing section 3a may divide each of 3D images 5A into two regions of candidate region CR and background region BR according to the P tile method known in the art.

In this case, the ratio of the number of pixels of candidate region CR to all pixels of each of 3D images 5A is defined in advance as a threshold. The threshold is stored in Threshold storage section 2a. Digitalizing section 3a divides each of 3D images 5A into two regions of candidate region CR and background region BR based on the threshold stored in threshold storage section 2a.

Alternatively, digitalizing section 3a may divide each of 3D images 5A into two regions of candidate region CR and background region BR according to the mode method known in the art.

In this case, digitalizing section 3a generates a histogram of each of 3D images 5A in such a manner that the horizontal axis represents pixel values and the vertical axis represents frequencies. Assuming that the shape of the histogram is a double-peak shape, digitalizing section 3a uses the trough of the histogram as the threshold so as to divide each of 3D images 5A into two regions of candidate region CR and background region BR.

Alternatively, digitalizing section 3a may decide a threshold such that the dispersion of pixel values becomes minimum in each of candidate region CR and background region BR and becomes large between candidate region CR and background region BR and may divide each of 3D images 5A into two regions of candidate region CR and background region BR based on the threshold.

Alternatively, digitalizing section a may divide each of 3D images 5A into two regions of candidate region CR and background region BR according to the fixed threshold method known in the art.

In this case, a threshold of pixel values is predetermined and stored in threshold storage section 2a. Digitalizing section 3a determiners whether or not the pixel value of each pixel of each of 3D images 5A is greater than the threshold stored in threshold storage section 2a. Digitalizing section 3a may divide each of 3D images 5A into two regions of candidate region CR and background region BR based on the determined result.

Alternatively, digitalizing section 3a may divide each of 3D images 5A into two regions of candidate region CR and background region BR according to the dynamic threshold method known in the art.

In this case, digitalizing section 3a divides each of 3D images 5A into small regions having a predetermined size and then divides each regions into two portions according to the P tile method, the mode method, or the determination analysis method so as to divide each of 3D images 5A into two regions of candidate region CR and background region BR.

Digitalizing section 3a stores each of 3D images 5A divided into candidate region CR and background region BR to image storage section 2c.

Then, attitude estimation section 3b identifies the locations of reference plane 3A for each of 3D images 5A. Attitude estimation section 3b estimates the relative attitude of image capturing device 5 to reference plane 3A based on the location of reference plane 3A of each of 3D images 5A.

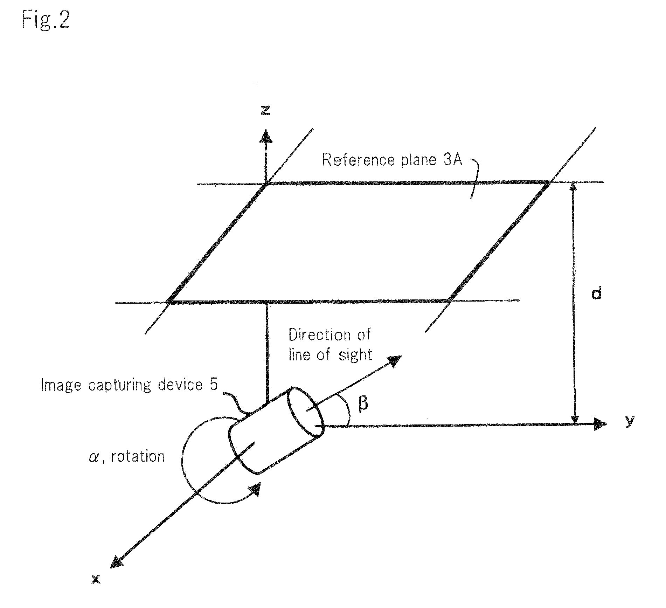

For example, it is assumed that the relationship of the locations of reference plane 3A and image capturing device 5 is as shown in Fig. 2.

In Fig. 2, the relationship of the locations of reference plane 3A and image capturing device 5 is as follows.

Reference plane 3A is a flat plane. In the case of an ordinary camera, the direction of the line of sight of image capturing device 5, when it is capturing an object, is the direction of optical axis of an image capturing lens of image capturing device 5. The angle of rotation of image capturing device 5 from the reference location about the axis of the direction of the line of sight, namely, roll, is $\alpha$ clockwise. The angle of image capturing device 5, when it is capturing an object, to reference plane 3A, namely, "pitch," is $\beta$. Reference plane 3A is positioned above image capturing device 5 and the distance between reference plane 3A and image capturing device 5 is d.

In Fig. 2, the individual orientations of the x axis, y axis, and z axis (xyz coordinate system) are set based on reference plane 3A. Specifically, the x axis and y axis are set such that a plane containing the x axis and y axis is parallel to reference plane 3A. The origin of the x axis, y axis, and z axis is set such that it is placed at the center location of image capturing device 5.

In the conditions shown in Fig. 2, the estimation of the attitude of image capturing device, 5 is equivalent to the estimation of the attitude of a cruising vehicle (vehicle on which image capturing device 5 is securely mounted) that cruises below the surface of the water at a depth of d.

To simplify the computation, it is assumed that a line of which the direction of the line of sight of image capturing device 5 is projected to the xy plane matches the y axis.

In addition, a coordinate system in which the center of image capturing device 5 is the origin, in which the direction of the line of sight of image capturing device 5 is the y' axis, in which the horizontal direction of image capturing device 5 is the x' axis, and in which the vertical direction of image capturing device 5 is the z' axis is considered (x'y'z' coordinate system).

As long as an object is represented as 3D image 5A that is output from image capturing device 5, the location of the object can be identified on 3D image 5A using the coordinate system (x'y'z' coordinate system) securely mounted on image capturing device 5.

The relationship between the coordinate system securely mounted on image capturing device 5 (x'y'z' coordinate system) and the coordinate system corresponding to reference plane 3A (xyz coordinate system) can be represented by Formula (1) that is a coordinate transform matrix.

[Mathematical Expression 1]

$$\begin{pmatrix} x' \\ y' \\ z' \end{pmatrix} = \begin{pmatrix} \cos\alpha & 0 & -\sin\alpha \\ \sin\alpha\sin\beta & \cos\beta & \cos\alpha\sin\beta \\ \sin\alpha\cos\beta & -\sin\beta & \cos\alpha\cos\beta \end{pmatrix} \begin{pmatrix} x \\ y \\ z \end{pmatrix} \qquad \text{Formula (1)}$$

Thus, reference plane 3A can be represented as follows.

[Mathematical Expression 2]

$$d = -x'\sin\alpha + y'\cos\alpha\,\sin\beta + z'\cos\alpha\,\cos\beta \qquad \text{Formula (2)}$$

When reference plane 3A clearly and accurately appears in 3D image 5A, attitude estimation section 3b can obtain $\alpha$, $\beta$, and d based on the locations of three points on reference plane 3A identified on the coordinate system coordinate system) fixed on image capturing device 5 and Formula (2).

If 3D image 5A is unclear or there is a lot of noise in 3D image 5A, attitude estimation section 3b can compensate reference plane 3A according to, for example, the least square method so as to obtain $\alpha$, $\beta$, and d.

Alternatively, as presented in Japanese Patent Application No. 2008-0222710, in the specification, proposed by the applicant of the present patent application, attitude estimation section 3b may obtain $\alpha$, $\beta$, and d according to the Huff transform.

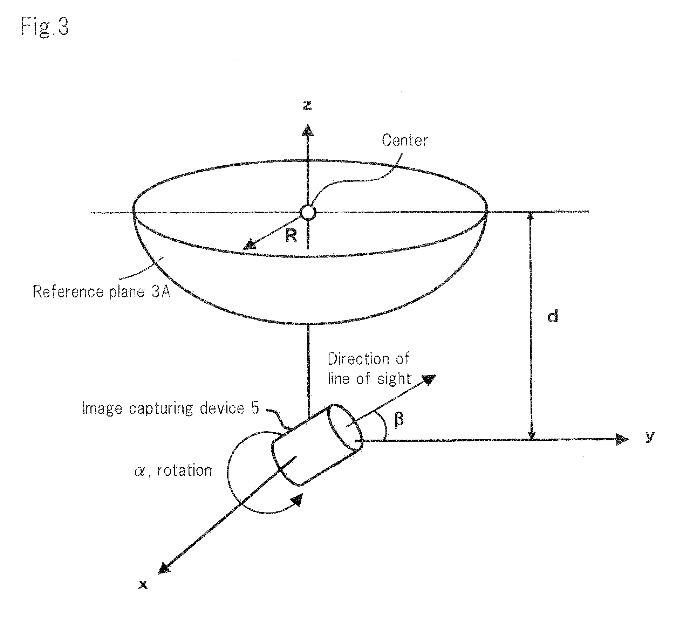

As presented in Japanese Patent Application No. 2008-0222710, in the specification, even if reference plane 3A is a sphere plane as shown in Fig. 3, attitude estimation section 3b can obtain the relative attitude of image capturing device 5 to reference plane 3A.

Even if a candidate of reference plane 3A is neither a flat plane nor a sphere plane, as long as a part of the candidate can be considered to be a flat plane or a sphere plane, attitude estimation section 3b can obtain the relative attitude of image capturing device 5 to reference plane 3A according to the foregoing method.

As presented in Japanese Patent Application No. 2008-0222710, in the specification, when the generalized Huff transform is applied, even if reference plane 3A is in any shape, attitude estimation section 3b can obtain the relative attitude of image capturing device 5 to reference plane 3A.

Then, rotation parameter computation section 3c stores the relative attitude of image capturing device 5 in reference plane 3A, the relative attitude being obtained for each of the plurality of 3D images 5A, in other words, at each of the plurality of times. Rotation parameter computation section 3c obtains the displacement of the angle of rotation of image capturing device 5 based on the plurality of attitudes at the plurality of times. In addition, rotation parameter computation section 3c computes the temporal variation of the rotation of image capturing device 5 such as rotational speed and rotational acceleration of image capturing device 5 as rotation parameters of image capturing device 5 based on the time intervals.

Rotation parameter computation section 3c recognizes a plurality of times, namely a plurality or captured times, based on the capture date/time information stamped on each of 3D images 5A.

In this exemplary embodiment, rotation parameter computation section 3c obtains attitude variation matrix 1 having parameters of "roll," "pitch," and "yaw" as a first coordinate transform matrix based on the variation of the attitude of image capturing device 5 at the plurality of times.

"Roll" and "pitch" have been already obtained as "$\alpha$" and "$\beta$" by attitude estimation section 3b, respectively. Thus, in this stage, only "yaw" of "roll," "pitch," and "yaw" has not yet been obtained.

Next, rotation parameter computation section 3c obtains attitude variation matrix 2 as a second coordinate transform matrix based on the variation of the attitude of image capturing device 5 at the plurality of times used to obtain attitude variation matrix 1.

In this stage, parameters used in attitude variation matrix 2 have not yet been obtained.

Due to the fact that attitude variation matrix 1 is equal to attitude variation matrix 2, rotation parameter computation section 3c generates a formula that represents the parameters and yaw used in attitude variation matrix 2 as "roll" and "pitch," which are already known.

Next, attitude variation matrix 1 and attitude variation matrix 2 will be described.

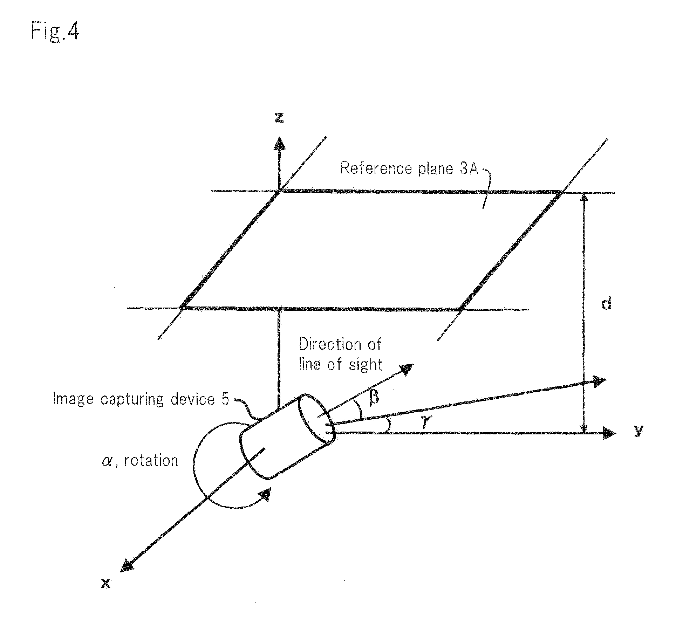

First, with reference to Fig. 4, attitude variation matrix 1 will be described.

As shown in Fig. 4, assuming that "roll" is $\alpha$ clockwise, "pitch" is $\beta$, and "yaw" is $\gamma$ that is counterclockwise about the z axis and in the positive direction of the y axis, rotation parameter computation section 3c computes coordinate transform matrix U as attitude variation matrix 1.

Individual elements of coordinate transform matrix U can be represented as follows.

[Mathematical Expression 3]

$$U_{ij}\,(i,\, j = 1,\, 2,\, 3)$$

[Mathematical Expression 4]

$$U_{11} = \cos\alpha\,\cos\gamma + \sin\alpha\,\sin\beta\,\sin\gamma$$

$$U_{12} = \cos\beta\,\sin\gamma$$

$$U_{13} = -\sin\alpha\,\cos\gamma + \cos\alpha\,\sin\beta\,\sin\gamma$$

$$U_{21} = -\cos\alpha\,\sin\gamma + \sin\alpha\,\sin\beta\,\cos\gamma$$

$$U_{22} = \cos\beta\,\cos\gamma$$

$$U_{23} = \sin\alpha\,\sin\gamma + \cos\alpha\,\sin\beta\,\cos\gamma \qquad \text{Formula (3)}$$

$$U_{31} = \sin\alpha\,\cos\beta$$

$$U_{32} = -\sin\beta$$

$$U_{33} = \cos\alpha\,\cos\beta$$

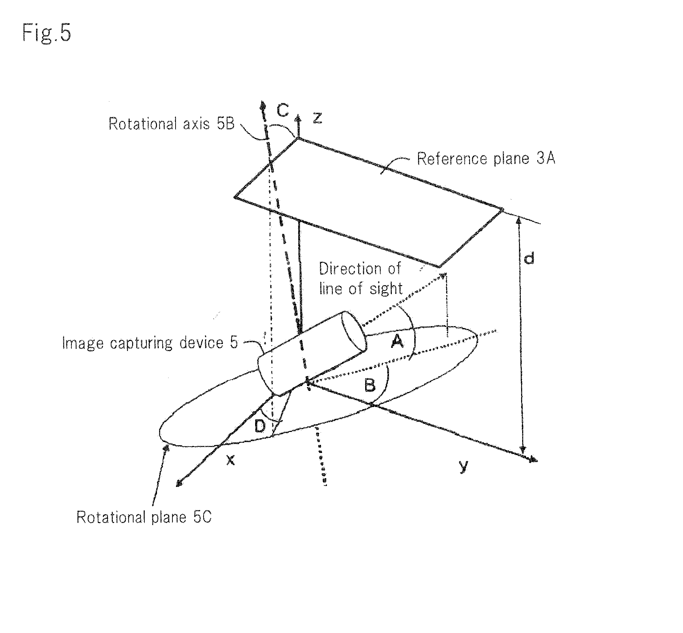

Next, with reference to Fig. 5, attitude variation matrix 2 based on the rotational motion of image capturing device 5 will be described.

Fig. 5 defines the rotational motion of image capturing device 5 as follows.

Rotational plane 5C normal to rotational axis 5B of image capturing device 5 is defined as a reference flat plane of the rotation of image capturing device 5. The angle between the direction of the line of sight of image capturing device 5 and rotational plane 5C is A. Rotational plane 5C is rotated by B counterclockwise from any direction. The angle between rotational axis 5B and reference plane 3A is C. In addition, rational axis 5B is rotated by D counterclockwise based on any direction. A, B, C, and D are used as parameters of attitude variation matrix 2.

In this case, rotation parameter computation section 3c computes coordinate transform matrix V as attitude variation matrix 2.

Individual elements of coordinate transform matrix V can be represented as follows.

[Mathematical Expression 5]

$$V_{ij}\,(i, j = 1, 2, 3)$$

[Mathematical Expression 6]

$$V_{11} = \cos B\,\cos D - \sin B\,\sin C\,\sin D$$

$$V_{12} = \cos A\,\sin B\,\cos D + (\cos A\,\cos B\,\cos C - \sin A\,\sin C)\,\sin D$$

$$V_{13} = -\sin A\,\sin B\,\cos D + (\sin A\,\cos B\,\cos C + \cos A\,\sin C)\,\sin D$$

$$V_{21} = -\cos B\,\sin D - \sin B\,\cos C\,\cos D$$

$$V_{22} = -\cos A\,\sin B\,\sin D + (\cos A\,\cos B\,\cos C - \sin A\,\sin C)\,\cos D$$

$$V_{23} = -\sin A\,\sin B\,\sin D + (\sin A\,\cos B\,\cos C + \cos A\,\sin C)\,\cos D \qquad \text{Formula (4)}$$

$$V_{31} = \sin B\,\sin C$$

$$V_{32} = -\cos A\,\cos B\,\sin C - \sin A\,\cos C$$

$$V_{33} = -\sin A\,\cos B\,\sin C + \cos A\,\cos C$$

The two coordinate transform matrixes represented by Formula (3) and Formula (4) are composed by combining different rotations in the same coordinate transform and thereby the results of the transform match. Namely, the following relationship is satisfied.

$$U = V \qquad \text{Formula (5)}$$

As the computed result of attitude estimation section 3b, although $\gamma$ (yaw) is indefinite, rotation parameter computation section 3c can represent A, B, C as $\alpha$, $\beta$ according to Formula (6) that can be obtained from the relationship of the third columns of individual matrixes represented by Formula (5).
[Mathematical Expression 7]

$$\sin\alpha \, \cos\beta = \sin B \, \sin C$$

$$-\sin\beta = -\cos A \, \cos B \, \sin C - \sin A \, \cos C \qquad \text{Formula (6)}$$

$$\cos\alpha \, \cos\beta = -\sin A \, \cos B \, \sin C + \cos A \, \cos C$$

For example, when A and C are constants and known, if the attitude obtained at time 1 is $\alpha_1$, and $\beta_1$, rotation parameter computation section 3c can easily obtain the angle of rotation $B_1$ at time 1 according to Formula (6). In other words, rotation parameter computation section 3c can obtain the angle of rotation $B_1$ at time 1 according to Formula (7).
[Mathematical Expression 8]

$$\sin B_1 = \frac{\sin\alpha_1 \cos\beta_1}{\sin C} \qquad \text{Formula (7)}$$

In addiction, when the attitude obtained at time 2 is $\alpha_1$ and $\beta_1$, if the angle of rotation at time 2 is $B_2$, rotation parameter computation section 3c can obtain the Rotational speed based on the time interval of time 1 and time 2 and $B_1$ and $B_2$.
Formula (7) denotes that even if A is unknown, as long as C is known, rotation parameter computation section 3c can obtain the angle of rotation and thereby the rotational speed according to this formula.
Alternatively, when A and C are constants, even if they are unknown, rotation parameter computation section 3c can use the lower two expressions of Formula (6) to obtain the following formula and thereby A.
[Mathematical Expression 9]

$$\cos\alpha_1 \, \cos\beta_1 - \cos\alpha_2 \, \cos\beta_2 = \tan A(\sin\beta_2 - \sin\beta_1) \qquad \text{Formula (8)}$$

When A is obtained, rotation parameter computation section 3c can use the lower two expressions of Formula (6) to obtain the following formula and thereby C.
[Mathematical Expression 10]

$$\cos A \, \cos\alpha \, \cos\beta + \sin A \, \sin\beta = \cos C \qquad \text{Formula (9)}$$

When C is obtained, rotation parameter computation section 3c can obtain the angle of rotation according to Formula (7) and thereby the temporal variation of the angle of rotation at a plurality of times.
Even if A and C are not constants, as long as the temporal variation is small and A and C can be considered to be constants only between time 1 and time 2, rotation parameter computation section 3c can obtain the angle of rotation and the temporal variation thereof in the same manner as the case in which A and C are constants.

Rotation parameter computation section 3c stores the attitude, angle of rotation, and temporal variation thereof that have been obtained in the above-described manner in parameter storage section 2b.

The attitude, angle of rotation, and temporal variation thereof stored in parameter storage section 2b are supplied to external control system 6 through a wired or wireless network according to a command received from data communication section 4a or a command issued by the user through character input section 1b.

The attitude, angle of rotation, and temporal variation thereof may be indicated by a display, a protector, a printer, or the like when commanded by the user.

According to this exemplary embodiment, attitude determination section 3d detects reference plane 3A (plane region) that is present in common with each of the plurality of 3D images 5A. Then, attitude determination section 3d obtains the relative attitude of image capturing device 5 to reference plane 3A for each of 3D images 5A, based thereof, and therein.

Rotation parameter computation section 3c obtains the rotational state of image capturing device 5 based on the relative attitude of image capturing device 5 to reference plane 3A, the relative attitude being obtained for each of 3D images 5A.

Thugs, since reference plane 3A is highly accurately detected from a 3D image in which an uneven shape or a pattern on a reference plane or a structure on a front plane cannot be distinguished due to a lot of noise or unclearness of the image, the attitude of image capturing device 5 can be estimated and the angle of rotation of image capturing device 5 and the temporal variation thereof can be computed.

(Second exemplary embodiment)

Next, with reference to a drawing, a second exemplary embodiment of the present invention will be described in detail.

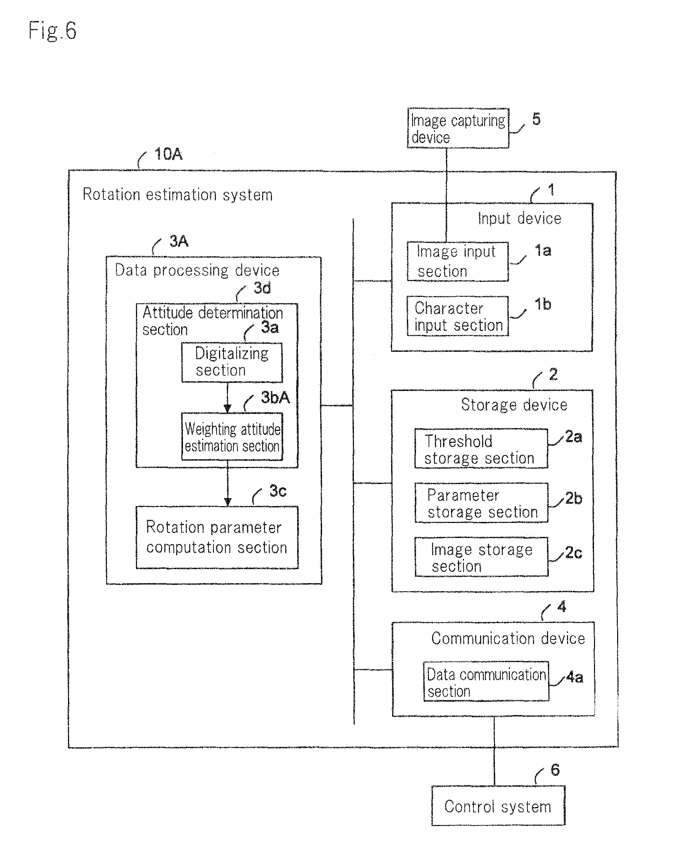

Fig. 6 is a block diagram showing rotation estimation system 10A. including the second exemplary embodiment of the present invention. In Fig. 6, sections having the same structure as those shown in Fig. 1 are denoted by the same reference numerals.

Rotation estimation system 13A is different from rotation estimation system 10 shown in Fig. 1 in that the former includes weighting attitude estimation section 3bA instead of attitude estimation sections 3b.

Next, rotation estimation system 10A will be described focusing on differences between rotation estimation system 10A and rotation estimation system 10.

Weighting attitude estimation section 3bA can be generally referred to as attitude estimation means.

Weighting attitude estimation section 3bA detects reference plane 3A based on pixel values in candidate region CR for each of 3D images 5A. Then, weighting attitude estimation section 3bA obtains the relative attitude of image capturing device 5 to reference plane 3A for each of 3D images 5A, based thereon, and therein.

As presented in Japanese Patent Application No. 2008-022710, in the specification, weighting attitude estimation section 3bA computes the likelihood in which reference plane 3A is present in candidate region CR based on pixel values of candidate region CR or a result into which the pixel values are transformed by a predetermined function and thereby detects reference plane 3A as the weight that represents the most likelihood.

According to this exemplary embodiment, weighting attitude determination section 3bA detects reference plane 3A based on pixel values in the candidate region. Thus, reference plane 3A can be highly accurately detected.

(Third exemplary embodiment)

Next, with reference to a drawing, a third exemplary embodiment of the present invention will be described in detail.

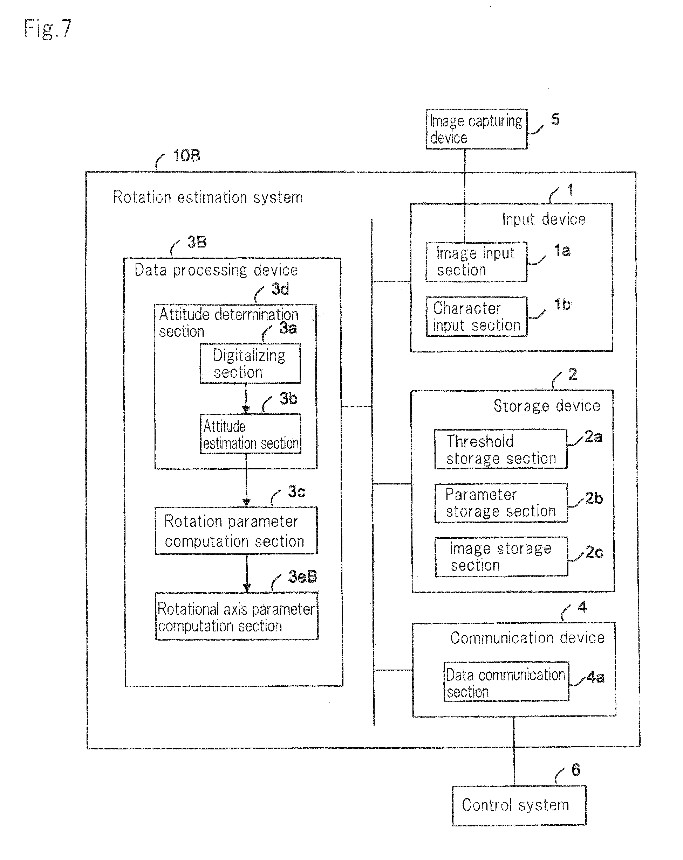

Fig. 7 is a block diagram showing rotation estimation system 10B including the third exemplary embodiment of the present invention. In Fig. 7, sections having the same structure as those shown in Fig. 1 are denoted by the same reference numerals.

Rotation estimation system 10B is different from rotation estimation system) 10 shown in Fig. 1 in that the former also includes rotational axis parameters computation section 3eB in the data processing device.

Next, rotation estimation system 10B will be described focusing on differences between rotation estimation system 10B and rotation estimation system 10.

Rotational axis parameter computation section 3eB can be generally referred to as rotational axis state estimation means.

Rotational axis parameter computation section 3eB obtains the Rotational state of the rotational axis of image capturing device 5 (rotational axis of "yaw" of image capturing device 5) based on the rotational state of image capturing device 5 computed by rotation parameter computation section 3c.

Rotational axis parameter computation section 3eB obtains the angle of rotation of the rotational axis of image capturing device 5 to a predetermined direction and the temporal variation thereof as the rotational state of the rotational axis of image capturing device 5 based on the rotational state of image capturing device 5.

In this exemplary embodiment, rotational axis parameter computation section 3eB obtains D based on A, B, and C that rotation parameter computation section 3c has computed according to Formula (3), Formula (4), and Formula (5) so as to obtain:

[Mathematical Expression 11]

$$\sin \gamma = \frac{1}{\cos \beta}\{\cos A \sin B \cos D + (\cos A \cos B \cos C - \sin A \sin C)\sin D\}$$

$$\cos \gamma = \frac{1}{\cos \beta}\{-\cos A \sin B \cos D + (\cos A \cos B \cos C - \sin A \sin C)\cos D\}$$

Formula (10)

and then delete γ from each matrix element of Formula (5).

Then, rotational axis parameter computation section 3eB represents D as A, B, C, α, and β so as to obtain D.

Rotational axis parameter computation section 3eB can obtain D at each of α, plurality of times and thereby obtain the temporal variation of D.

In addition, rotational axis parameter computation section 3eB can obtain γ according to Formula (10).

Rotational axis parameters computation section 3eB stores the orientation (α, β, and γ) of rotational axis 5B and the temporal variation (temporal variation of D) obtained in the above-described manner along with the attitude, angle of rotation, and the temporal variation thereof to parameter storage section 2b.

The orieritation of rotational axis 5B and the temporal variation thereof stored in parameter storage section 2b are supplied to external control system 6 through a wired or wireless network according to a command received from data communication section 4a or a command issued by the user through character input section 1b.

The orientation of rotational axis 5B and the temporal variation thereof may be indicated by a display, a projector, a printer, or the like when commanded by the user.

According to this exemplary embodiment, the rotational state of the rotational axis of image capturing device 5 can be obtained based on the rotational state of image capturing device 5 computed by rotation parameter computation section 3c.

Thus, from a 3D image in which an uneven shape or a pattern on a reference plane or a structure on a front plane cannot be distinguished due to a lot of noise or unclearness of the image, the rotational state of the rotational axis of image capturing device 5, for example, the angle of rotation of the rotational axis of image capturing device 5 to a predetermined direction and the temporal variation of the angle of rotation of image capturing device 5, can be computed.

Likewise, in this exemplary embodiment, weighting attitude estimation section 3bA may be used instead of attitude estimation section 3b.

(Fourth exemplary embodiment)

Next, with reference to a drawing, a fourth exemplary embodiment of the present invention will be described in detail.

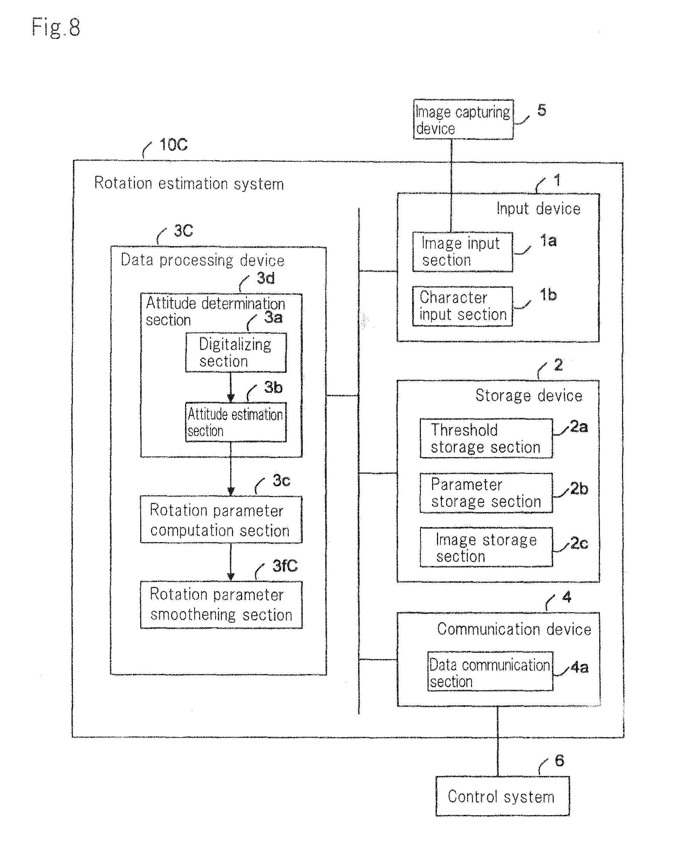

Fig. 8 is a block diagram showing rotation estimation system 10C including the fourth exemplary embodiment of the present invention. In Fig. 8, sections having the same structure as those shown in Fig. 1 are denoted by the same reference numerals.

Rotation estimation system 10C is different from rotation estimation system 10 shown in Fig. 1 in that the former also includes rotation parameter smoothening section 3fC in the data processing device.

Next, rotation estimation system 10C will be described focusing on differences between rotation estimation system 10C and rotation estimation system) 10.

Rotation parameter smoothening section 3fC can be generally referred to as the rotational state smoothening means.

Rotation parameter smoothening section 3fC smoothens the rotational state of image capturing device 5 obtained a multiple number of times by rotation parameter computation section 3c.

More specifically, rotation parameter smoothening section 3fC smoothens the rotational state of image capturing device 5 obtained a plurality of times by data processing device 3 with respect to times.

Rotation parameter smoothening section 3fC may use as the smoothening method the running means method in which a convolution is performed for rotational states that are weighted before and after a particular time.

Alternatively, the smoothening method may be a method in which a high frequency component is removed by a low pass filter.

Alternatively, the smoothening method may be a method in which a polynomial with respect to times for a particular time interval is compensated according to the least square method.

Alternatively, the smoothening method may be a method that uses an optimum state estimation filter such as a Kalman filter.

Rotation parameter smoothening section 3fC stores the smoothened rotational state of image capturing device 5 that has been obtained in the above-described manner in parameter storage section 2b.

The smoothened rotational state of image capturing device 5 stored in parameter storage section 2b is supplied to external control system 6 through a wired or wireless network according to a command received from data communication section 4a or a command issued by the user through character input section 1b.

The smoothened rotational state of image capturing device 5 may be indicated by a display, a protector, a printer, or the like when commanded by the user.

In addition, the smoothened rotational state of image capturing device 5 and pre-smoothened rotational state of image capturing device 5 may be stored in parameter storage section 2b and then supplied to external control system 6 or displayed.

According to this exemplary embodiment, rotation parameter smoothening section 3fC smoothens the rotational state of image capturing device 5 obtained a multiple number of times by rotation parameter computation section 3c.

Thus, even if the accuracy of the attitude is not high due to a lot of noise in an image, the rotational state of image capturing device 5 can be accurately obtained.

In this exemplary embodiment, weighting attitude estimation section 3bA may be used instead of attitude estimation section 3b.

Moreover, in this exemplary embodiment, rotational axis parameter computation section 3eB may be added.

(Fifth exemplary embodiment)

Next, with reference to a drawing, a fifth exemplary embodiment of the present invention will be described is detail.

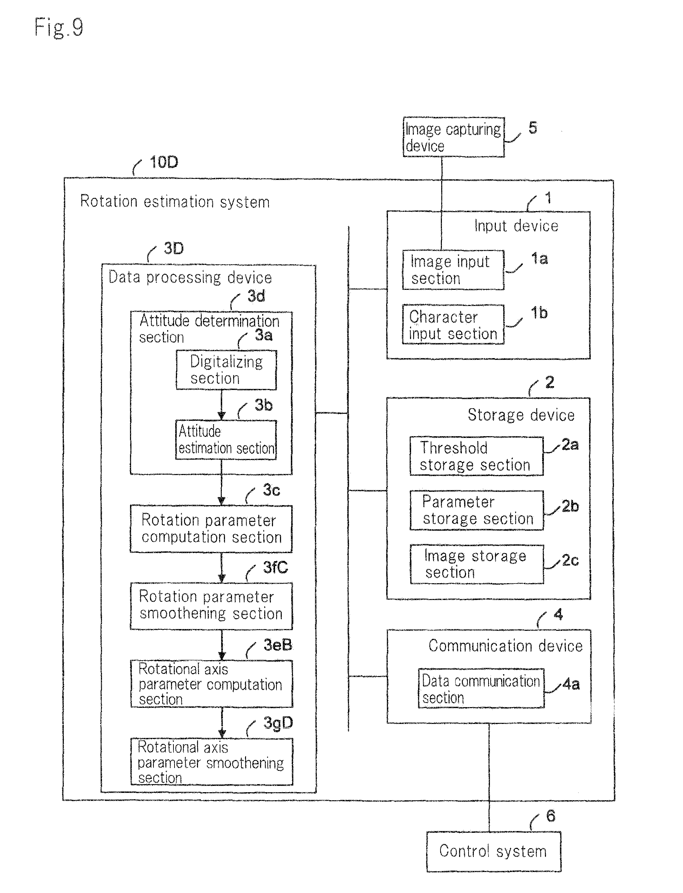

Fig. 9 is a block diagram showing rotation estimation system 10D including the fifth exemplary embodiment of the present invention. In Fig. 9, sections having the same structure as those shown in Fog. 7 or 8 are denoted by the same reference numerals.

Rotation estimation system 10D is different from rotation estimation system 10C shown in Fig. 8 in that the former also includes rotational axis parameter computation section 3eB and rotational axis parameter smoothening section 3gD in the data processing device.

Next, rotation estimation system 10D will be described focusing on differences between rotation estimation system 10D and rotation estimation system 10C.

Rotational axis parameter smoothening section 3gD can be generally referred to as rotational axis state smoothening means.

Rotational axis parameter smoothening section 3gD smoothens the rotational state of the rotational axis of image capturing device 5 obtained a multiple number of times by rotational axis parameter computation section 3eB.

More specifically, rotational axis parameter smoothening section 3gD smoothens the rotational state of the rotational axis of image capturing device 5 obtained a plurality of times by rotational axis parameter computation section 3eB with respect to times.

Rotational axis parameter smoothening section 3gD may use as the smoothening method the running means method in which a convolution is performed for rotational states that are weighted before and after a particular time.

Alternatively, the smoothening method may be a method in which a high frequency component is removed by a low pass filter.

Alternatively, the smoothening method may be a method in which a polynomial with respect to times for a particular time interval is compensated according to the least square method.

Alternatively, the smoothening method may be a method that uses an optimum state estimation filter such as a Kalman filter.

The smoothening method that rotational axis parameters smoothening section 3gD uses may be the same as or different from the smoothening method that rotation parameter smoothening section 3fC uses.

Rotational axis parameter smoothening section 3gD stores the smoothened rotational state of the rotational axis of image capturing device 5 that has been obtained in the above-described manner to parameter storage section 2b.

The smoothened rotational state of the rational axis of image capturing device 5 stored in parameter storage section 2b is supplied to external control system 6 through a wired or wireless network according to a command received from data communication section 4a or a command issued by the user through character input section 1b.

The smoothened rotational state of the rotational axis of image capturing device 5 may be indicated by a display, a projector, a printer, or the like when commanded by the user.

In addition, the smoothened rotational state of the rotational axis of image capturing device 5 and pre-smoothened rotational state of the rotational axis of image capturing device 5 may be stored in parameter storage section 2b and then supplied to external control system 6 or displayed.

According to this exemplary embodiment, rotational axis parameter smoothening section 3gD smoothens the rotational state of the rotational axis of image capturing device 5 obtained a multiple number of times by rotational axis parameter computation section 3eB.

Thus, even if the accuracy of the attitude is not high due to a lot of noise in an image, the rotational state of the rotational axis of image capturing device 5 can be accurately obtained.

The data processing device according to each of the above-described exemplary embodiments may be a device in which a program that accomplishes the functions of individual sections of the device is recorded to a computer-readable record medium and the program is read by a computer system and executed thereby as well as a device that is executed by dedicated hardware.

The computer-readable record medium is, for example, a record medium such as a flexible disk, a magneto-optical disc, or a CD-ROM (Compact Disk Read Only Memory) or a storage device such as a hard disk device that is built into the computer system.

Alternatively, the computer-readable record medium includes a substance that dynamically stores the program like the case in which the program is transmitted through the Internet (transmission medium or transmission wave) or a substance that stores the program for a predetermined period of time such as a volatile memory build into the computer system that functions as a server.

Now, with reference to the exemplary embodiments, the present invention has been described. However, it should be understood by those skilled in the art that the structure and details of the present invention may be changed in various manners without departing from the scope of the present invention.

The present application claims priority based on Japanese Patent Application No. 2009-027207 filed on February 9, 2009, the entire contents of which are incorporated herein by reference in its entirety.

DESCRIPTION OF REFERENCE NUMERALS

| | |
|---|---|
| 10, 10A to 10D | Rotation estimation systems |
| 1 | Input device |
| 1a | Image input section |
| 1b | Character input section |
| 2 | Storage device |
| 2a | Threshold storage section |
| 2b | Parameter storage section |
| 2c | Image storage section |
| 3, 3A to 3D | Data processing devices |
| 3a | Digitalizing section |
| 3b | Attitude estimation section |
| 3bA | Weighting attitude estimation section |
| 3c | Rotation parameter computation section |
| 3d | Attitude determination section |
| 3eB | Rotational axis parameter computation section |
| 3fC | Rotation parameter smoothening section |
| 3gD | Rotational axis parameter smoothening section |
| 4 | Communication device |
| 4a | Data communication section |
| 5 | Image capturing device |
| 6 | Control system |

**Claims**

1. A rotation estimation device, comprising:

   attitude determination means for accepting a plurality of three-dimensional images captured by an image capturing device at a plurality of timings, detecting a plane region that is present in common with said plurality of images, and obtaining a relative attitude of said image capturing device to said plane region in said image based on said image for each of the plurality of images; and
   rotation state estimation means for obtaining a rotational state of said image capturing device based on the relative attitude of said image capturing device, the relative attitude being obtained for each of said images.

2. The rotation estimation device according to claim 1,
   wherein said rotational state estimation means obtains an angle of rotation of said image capturing device to a predetermined reference direction and a temporal variation of the angle of rotation of the image capturing device as a rotational state of said image capturing device based on the relative attitude of said image capturing device, the relative attitude being obtained for each of said images.

3. The rotation estimation device according to claim 1 or 2,
   wherein said attitude determination means includes:

   detection means for accepting said plurality of three-dimensional images and detecting a candidate region as a candidate of said plane region for each of said images; and
   attitude estimation means for detecting said plane region based on pixel values of said candidate region in each of said images and obtaining the relative attitude of said image capturing device to said plane region in said image based on said image for each of said plurality of images.

4. The rotation estimation device according to any one of claims 1 to 3, further comprising:

   rotational axis state estimation means for obtaining a rotational state of a rotational axis of said image capturing device based on the rotational state of said image capturing device.

5. The rotation estimation device according to claim 4,
   wherein said rotational axis state estimation means obtains an angle of rotation of the rotational axis of said image capturing device to a predetermined direction and an temporal variation of the angle of rotation of the rotational axis as the rotational state of said rotational axis based on the rotational state of said image capturing device.

6. The rotation estimation device according to claim 4 or 5,
   wherein said rotational axis state estimation means further obtains the rotational state of said rotational axis a multiple number of times; and
   said device further comprising rotational axis state smoothening means for smoothening the rotational state of said rotational axis obtained said multiple number of times with respect to times.

7. The rotation estimation device according to any one of claims 1 to 6,
   wherein said rotation estimation means further obtains the rotational state of said image capturing device a multiple number of times; and
   said device further comprising rotational state smoothening means for smoothening the rotational state of said image capturing device obtained said multiple number of times with respect to times.

8. A rotation estimation method that a rotation estimation device perform, the method comprising::

   accepting a plurality of three-dimensional images captured by an image capturing device at a plurality of timings, detecting a plane region that is present in common with said plurality of images, and obtaining a relative attitude of said image capturing device to said plane region in said image based on said image for each of said plurality of images; and
   obtaining a rotational state of said image capturing device based on the relative attitude of said image capturing device, the relative attitude being obtained for each of said images.

9. The rotation estimation method according to claim 8,

wherein obtaining the rotational state of said image capturing device includes obtaining an angle of rotation of said image capturing device to a predetermined reference direction and a temporal variation of the angle of rotation of the image capturing device as a rotational state of said image capturing device based on the relative attitude of said image capturing device, the relative attitude being obtained for each of said images.

10. The rotation estimation method according to claims 8 or 9,
wherein obtaining the relative attitude of said image capturing device includes:

accepting said plurality of three-dimensional images to detect a candidate region as a candidate of said plane region for each of said images; and
detecting said plane region based on pixel values of said candidate region in each of said images and obtaining the relative attitude of said image capturing device to said plane region in said image based on said image for each of said plurality of images.

11. The rotation estimation method according to any one of claims 7 to 10, further comprising:

obtaining a rotational state of a rotational axis of said image capturing device based on the rotational state of said image capturing device.

12. The rotation estimation method according to claim 11,
wherein obtaining a rotational state of the rotational axis of said image capturing device includes obtaining the angle of rotation of the rotational axis of said image capturing device to a predetermined direction and a temporal variation of the angle of rotation of the rotational axis as the rotational state of said rotational axis based on the rotational state of said image capturing device.

13. The rotation estimation method according to claim 11 or 12,
wherein obtaining the rotational state of the rotational axis of said image capturing device further includes:

obtaining the rotational state of said rotational axis a multiple number of times; and
said method further comprising smoothening the rotational state of said rotational axis obtained said multiple number of times with respect to times.

14. The rotation estimation method according to any one of claims 8 to 13,
wherein obtaining the rotational state of said image capturing device further includes:

obtaining the rotational state of said image capturing device a multiple number of times; and
said method further comprising smoothening the rotational state of said image capturing device obtained said multiple number of times with respect to times.

15. A computer-readable record medium that stores a program that causes a computer to execute procedures comprising:

an attitude determination procedure that accepts a plurality of tllree-dimensional images captured by an image capturing device at a plurality of timings, detects a plane region that is present in common with said plurality of images, and obtains a relative attitude of said image capturing device to said plane region in said image based on said image for each of said plurality of images; and
a rotational state estimation procedure that obtains a rotational state of said image capturing device based on the relative attitude, of said image capturing device, the relative attitude being obtained for each of said images.

16. The record medium according to claim 15,
wherein said rotation state estimation procedure obtains an angle of rotation of said image capturing device to a predetermined reference direction and a temporal variation of the angle of rotation of the image capturing device as a rotational state of said image capturing device based on the relative attitude of said image capturing device, the relative attitude being obtained for each of said images.

Fig.1

Fig.2

Reference plane 3A

z

d

Direction of
line of sight

β

Image capturing device 5

y

α, rotation

x

Fig.3

Center

z

R

Reference plane 3A

d

Direction of
line of sight

β

Image capturing device 5

α, rotation

y

x

Fig.4

z

Reference plane 3A

Direction of
line of sight

β

Image capturing device 5

γ

y

d

α, rotation

x

Fig.5

Rotational axis 5B

C  z

Reference plane 3A

Direction of
line of sight

d

Image capturing device 5

A

B

D

x

y

Rotational plane 5C

Fig.6

Image capturing device — 5

10A

Rotation estimation system

3A

Data processing device

3d
Attitude determination section

3a
Digitalizing section

3bA
Weighting attitude estimation section

3c
Rotation parameter computation section

1
Input device

1a
Image input section

1b
Character input section

2
Storage device

2a
Threshold storage section

2b
Parameter storage section

2c
Image storage section

4
Communication device

4a
Data communication section

6
Control system

Fig.7

Fig.8

Image capturing device  5

10C

Rotation estimation system

Input device  1

Image input section  1a

Character input section  1b

3C

Data processing device

Attitude determination section  3d

Digitalizing section  3a

Attitude estimation section  3b

Rotation parameter computation section  3c

Rotation parameter smoothening section  3fC

Storage device  2

Threshold storage section  2a

Parameter storage section  2b

Image storage section  2c

Communication device  4

Data communication section  4a

Control system  6

Fig.9

Image capturing device  5

10D

Rotation estimation system

3D

Data processing device

3d
Attitude determination section
3a
Digitalizing section
3b
Attitude estimation section

3c
Rotation parameter computation section

3fC
Rotation parameter smoothening section

3eB
Rotational axis parameter computation section

3gD
Rotational axis parameter smoothening section

1
Input device
1a
Image input section
1b
Character input section

2
Storage device
2a
Threshold storage section
2b
Parameter storage section
2c
Image storage section

4
Communication device
4a
Data communication section

6
Control system

24

<table>
<tr><td colspan="2"><strong>INTERNATIONAL SEARCH REPORT</strong></td><td>International application No.<br>PCT/JP2009/070945</td></tr>
</table>

A. CLASSIFICATION OF SUBJECT MATTER
*G01B11/26*(2006.01)i, *G06T1/00*(2006.01)i, *H04N5/225*(2006.01)i, *H04N5/232* (2006.01)i

According to International Patent Classification (IPC) or to both national classification and IPC

B. FIELDS SEARCHED

Minimum documentation searched (classification system followed by classification symbols)
G01B11/00-11/30, G06T1/00, H04N5/222-5/257, G01C15/00

Documentation searched other than minimum documentation to the extent that such documents are included in the fields searched
| | | | |
|---|---|---|---|
| Jitsuyo Shinan Koho | 1922–1996 | Jitsuyo Shinan Toroku Koho | 1996–2010 |
| Kokai Jitsuyo Shinan Koho | 1971–2010 | Toroku Jitsuyo Shinan Koho | 1994–2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2004-37396 A (The Foundation for the Promotion of Industrial Science), 05 February 2004 (05.02.2004), entire text; all drawings (Family: none) | 1-16 |
| A | JP 2008-298685 A (Toyota Central Research and Development Laboratories, Inc.), 11 December 2008 (11.12.2008), entire text; all drawings & WO 2008/146114 A2 | 1-16 |
| A | JP 2008-9999 A (Sony Corp.), 17 January 2008 (17.01.2008), paragraphs [0040] to [0124] (Family: none) | 1-16 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>04 March, 2010 (04.03.10) | Date of mailing of the international search report<br>16 March, 2010 (16.03.10) |
|---|---|
| Name and mailing address of the ISA/<br>Japanese Patent Office | Authorized officer |
| Facsimile No. | Telephone No. |

Form PCT/ISA/210 (second sheet) (July 2009)

**INTERNATIONAL SEARCH REPORT**

International application No.

PCT/JP2009/070945

| C (Continuation).   DOCUMENTS CONSIDERED TO BE RELEVANT | | |
|---|---|---|
| Category* | Citation of document, with indication, where appropriate, of the relevant passages | Relevant to claim No. |
| A | JP 2009-186364 A  (NEC Corp.),<br>20 August 2009 (20.08.2009),<br>entire text; all drawings<br>& US 2009/202174 A1 | 1-16 |

Form PCT/ISA/210 (continuation of second sheet) (July 2009)

## REFERENCES CITED IN THE DESCRIPTION

**Patent documents cited in the description**

- JP 2004127080 A
- JP 2008222710 A
- JP 2008022710 A
- JP 2009027207 A